# EUROPEAN PATENT SPECIFICATION

(11) **EP 3 196 630 B1**
(45) Date of publication and mention of the grant of the patent: **05.02.2020**
(21) Application number: 15842509.0
(22) Date of filing: 13.04.2015
(51) Int. Cl.: G01N 1/22, G01N 1/40, G01N 30/08, A24C 5/34

(54) **ROTATING SMOKING MACHINE COLLECTING DEVICE AND METHOD FOR USING SAME TO ANALYZE CIGARETTE SMOKE**
ROTIERENDE SAMMELVORRICHTUNG FÜR RAUCHMASCHINE UND VERFAHREN ZUR VERWENDUNG DAVON ZUR ANALYSE VON ZIGARETTENRAUCH
DISPOSITIF ROTATIF DE COLLECTE DE MACHINE À FUMER ET SON PROCÉDÉ D'UTILISATION POUR ANALYSER LA FUMÉE DE CIGARETTE

(30) Priority: 19.09.2014 CN 201410481831; 19.09.2014 CN 201410482010
(43) Date of publication of application: 26.07.2017
(73) Proprietor: China National Tobacco Quality Supervision & Test Center, Zhengzhou, Henan 450001 (CN)
(72) Inventor: HOU, Hongwei, Zhengzhou Henan 450001 (CN); JIANG, Xingyi, Zhengzhou Henan 450001 (CN); LUO, Yanbo, Zhengzhou Henan 450001 (CN); PANG, Yongqiang, Zhengzhou Henan 450001 (CN); ZHU, Fengpeng, Zhengzhou Henan 450001 (CN); LI, Xue, Zhengzhou Henan 450001 (CN); ZHANG, Hongfei, Zhengzhou Henan 450001 (CN); HU, Qingyuan, Zhengzhou Henan 450001 (CN); CHEN, Zaigen, Zhengzhou Henan 450001 (CN); XIN, Baojun, Zhengzhou Henan 450001 (CN); HUANG, Weidong, Zhengzhou Henan 450001 (CN); CHANG, Cheng, Zhengzhou Henan 450001 (CN); ZENG, Bo, Zhengzhou Henan 450001 (CN); NIU, Gang, Zhengzhou Henan 450001 (CN); REN, Jingxia, Zhengzhou Henan 450001 (CN); MENG, Ke, Zhengzhou Henan 450001 (CN)
(74) Representative: Schiweck Weinzierl Koch Patentanwälte Partnerschaft mbB
(86) International application number: PCT/CN2015/076486
(87) International publication number: WO 2016/041348

(56) References cited:
- EP-A1- 0 816 823
- EP-A2- 2 554 971
- WO-A2-2014/040703
- CN-A- 101 339 103
- CN-A- 102 155 539
- CN-A- 104 266 872
- CN-A- 104 266 873
- CN-U- 201 518 020
- CN-U- 203 249 803
- CN-Y- 200 982 968
- CN-Y- 201 429 591
- GB-A- 2 424 484
- US-A- 4 362 047
- US-A- 4 589 775
- US-A1- 2008 092 629

## Description

### FIELD OF THE INVENTION

The present invention relates to the field of cigarette smoke analysis and detection technology and more particularly to a rotating smoke collecting device for a smoke capturing machine and a method for using the same to analyze cigarette smoke.

### BACKGROUND OF THE INVENTION

A smoking machine of the prior art is disclosed in document CN201518020U. With further development of smoking and health research, people are increasingly concerned about the harmful ingredients in cigarette smoke. Cigarette mainstream smoke contains a large number of volatile organic compounds. There are five kinds of volatile organic compounds listed in the list of 44 species of harmful organic compounds listed in the Canadian Health Department, that is: 1,3-butadiene, isoprene, acrylonitrile, benzene and toluene. 1,3-butadiene and isoprene are carcinogenic by IARC as human carcinogens (2B); benzene is human carcinogen and its carcinogenicity is "sufficient animal experiment and human experimental data " (Group1); acrylonitrile is classified by IARC as a carcinogen, which belongs to " limited animal experiments and human experimental data"; toluene may irritate the skin and mucous membrane and apply an anesthesia effect on the central nervous system, and long-term exposure under toluene may also cause cancer. Therefore, the effective capture and accurate determination of volatile organic compounds in cigarette smoke has practical significance for smoking and health research. At present many have used GC-MS to measure volatile organic compounds in cigarette smoke mainly by cold solution absorption method (about -70°C methanol) and adsorption tube method to capture. Cold solution absorption method uses two collection bottles with 15mL cold methanol and connected in series to collect, which causes the operation cumbersome. As for the adsorption tube method, smoking collecting device suction channel "dead volume" occurs and the pressure drop is larger so that the test results are less reproducible.

### SUMMARY OF THE INVENTION

In order to overcome the drawbacks of the prior art, there is provided a rotating smoke collecting device for a smoke capturing machine and a method for analyzing cigarette smoke using the device. The device according to the present invention has the advantages of simple operation and good repeatability low consumption of organic solvent no significant difference between the test result and the standard method and can achieve the capture of the volatile organic compound at room temperature and is suitable for large-volume sample analysis.

The above object of the present invention is achieved by the following technical solution.

On one hand, A rotating smoke collecting device collecting device; the device comprising an adsorption block, an upper collector cover, a lower collector cover, a hollow upper cover inner cavity, a retaining plug and a Cambridge filter; it is characterized in that an internal portion of the upper collector cover is provided with the hollow upper cover inner cavity; and the adsorption block is located in the hollow upper cover inner cavity.

Preferably, the upper collector cover is connected to the lower collector cover and a hollow cavity is formed therein.

Preferably, the Cambridge filter is provided at a cross section of the hollow cavity formed by of the upper collector cover and the lower collector cover.

Preferably, the upper collector cover is a hollow cavity; the adsorbent block is located in the upper collector cover, retaining plug is disposed at a lower end of the adsorption block.

Preferably, the adsorption block comprises a solid adsorbent material and a sieve plate, wherein the middle part of the adsorption block is a solid adsorbent material and the sieve plate is provided on upper and lower surfaces of the solid adsorbent material.

Preferably, the adsorbent material in the adsorption block is an activated carbon material a magnetic adsorbent material or a molecular sieve material, a particle size of the adsorbent material is 40-80 µm; the sieve plate on upper and lower surfaces of the adsorbent material is a sand core sieve plate having an aperture diameter of 40-60 µm.

The adsorption block is an adsorption tube, the adsorption tube comprises an outer tube an adsorption tube' s adsorption block a tapered interface and a gasket wherein the outer tube is a hollow cylinder and the adsorption tubes' adsorption block is located inside the outer tube, the tapered interface is a hollow cylinder of which the inner cavity is tapered, a wide end of the inner cavity connects with the outer tube side, wherein the gasket is a hollow cylinder which is located inside the tapered interface and abuts against the adsorption tube adsorption block.

Preferably, the adsorption tube the middle of the adsorption tubes' adsorption block is a solid adsorbent material; a sieve plate is provided on both sides of the solid adsorbent material, the adsorbent material is an activated carbon material a magnetic adsorbent material or a molecular sieve material, wherein the adsorbent material havs a particle size of from 40 to 80µm, the two side sieve plates of the adsorbent material each is a sand core sieve plate having a diameter an aperture of 40-60 µm. On the other hand, the present invention provides a method of using the above the rotating smoking collecting device and method for analyzing volatile organic compounds in cigarette smoke by using the rotating smoke collecting device, wherein the method comprises the following steps:
Step 1, performing sample balance according to GB / T 16447 standard conditions and selection f average mass ± 0.02 g and average suction resistance ± 50 Pa of cigarettes for sample testing;
Step 2, mounting the rotating smoke collecting device on a smoke capturing machine, and sucking one cigarette at a time;
Step 3, removing the rotating smoke collecting device after the capture, and transferring the adsorbent block to a vessel for extraction; and
Step 4, mounting a blank sample in the rotating smoke collecting device, sucking one cigarette at a time and repeating step 3, comparing the results of the blank sample processing with those of the cigarette sample to analyze volatile organic compounds in cigarette smoke.

The technical solution of the invention can also be described as follows:
The present invention provides a smoke collecting device, which device comprises:
an adsorption device, which can be in detachable connection with a clamping device for clamping the cigarette holder and inside which an adhesive material is placed to adsorb substances in cigarette smoke, such as volatile organic compounds; and
a capture chamber with two open ends, wherein one end of the capture chamber is in sealing communication with said adsorption device so as to allow the smoke passing through said adsorption device to enter, the other end of the capture chamber is communicated with a smoke suction pump.

The smoke suction pump pumps gases during operation. Cigarette smoke enters into the adsorption device. The substances in the smoke such as the volatile organic compounds are absorbed by the adsorbent material inside the adsorption device, and the unabsorbed substance is pumped out by the smoke suction pump through the capture chamber. The composition of the cigarette smoke is measured by detecting the composition and contents of the substances in the adsorbent material inside the adsorption device.

Preferably, the adsorption device and the capture chamber are arranged in the order from top to bottom and wherein the horizontal cross-section of the collecting cavity is circular.

Preferably, the adsorption device can be detachably sealed with the clamping device of the existing rotating smoke collecting device collecting device collecting.

Preferably, the adsorption device and the capture chamber are provided in an integral or detachable manner, preferably a detachable manner. When the adsorption device and the makeup chamber are detachable the adsorption device is easily removed to determine the composition and content of the adsorption material.

Preferably, when the holding device, the adsorption device and the capture chamber are detachably provided, gaskets are provided between the holding device, the adsorption device and the capture chamber, so as to ensure that these three are communicated with each other while remaining seal from the outside.

Preferably, when the adsorption device and the capture cavity are integrally provided, the adsorption device is provided with a lid that can be opened and closed, to remove or replace the adsorption materials in the adsorption device.

Preferably, adsorption device is also provided with two sieve plates, adsorption material sets the device placed between two sieve-plates, preferably, two sieve-plates for 40-60µm aperture sieve plate.

Preferably, the adsorption device is also provided with two side sieve plates therein, the adsorption material inside the adsorption device are placed between the two side sieve plates; preferably, the two side sieve plates are sandstone sieve plates each with 40-60 µm aperture.

Preferably, the adsorbent materials inside the adsorption device are solid adsorbent materials, preferably, activated carbon materials, magnetic materials or molecule sieve materials; and preferably, an adsorbent particle size of the material is 40-80 µm.

Preferably, the adsorption device is provided with a sorbent tube therein, which includes an outer tube, and absorbent material is placed inside the outer tube. When such the sorbent tube is used, the sorbent tube can be removed directly and conveniently during replacement or removal of the adsorption material. Preferably, the outer tube of the sorbent tube is provided with two side sieve-plates therein, absorption materials are placed between the two side sieve plates; preferably, each of the two side sieve plates is a sand core sieve plate having an aperture of 40-60 µm. Preferably, the smoke collecting device includes the plug which sets the adsorption device below, for blocking the Adsorption device.

Preferably, the capture chamber has a volume of 10∼20mL and a shape of double cone chamber that is a chamber formed by adhering the same two cones at side to side and back to back and has open ends at both ends (i.e., the narrow end is the open end), wherein one end is communicated with the adsorption material and the other end is communicated with the pump. Preferably the Cambridge filter is disposed on a maximum circular cross-section of the double cone chamber. On the other hand, the present invention provides a method for analyzing a volatile organic compound in a cigarette smoke using the aforementioned smoke collecting device for a smoke capturing machine, the method comprises the following steps:
Step 1, picking up cigarette samples, and performing sample balance to select f average mass ± 0.02 g and average suction resistance ± 50 Pa of cigarettes for sample testing according to GB/T 16447 standard conditions, wherein the average quality and average suction resistance are average values of qualities and suction resistances of one more than 50 cigarettes for one brand;
Step 2, mounting the smoke collecting device on the smoke capturing machine, sucking one cigarette at a time;
Step 3, removing the smoke collecting device after the capture, transferring adsorbent material inside an adsorption device of the smoke collecting device to a vessel for extraction; and
Step 4, mounting a blank sample in the smoke collecting device, sucking one cigarette at a time and repeating the step 3, comparing the results of the blank sample processing with those of the cigarette sample to analyze volatile organic compounds in cigarette smoke.

Compared with the prior art, the present invention has at least the following advantageous technical effects:
1. The present invention employs a new type of smoke collecting device, which is added with an inner cavity containing solid adsorbent material in the front cover of the collector as compared with the conventional capturing device, so that the escape of smoke is relaxed and residence time in the collector is prolonged, and the adsorbent material between the sieve plates has a good adsorption effect on the volatile organic compounds in cigarette smoke, which can make cigarette smoke gas flow to fully contact with adsorbent, to ensure that the relevant components of cigarette smoke is to be effectively absorbed, and meet requirements for the analysis of volatile organic compounds in cigarette smoke.
2. When the smoke collecting device of the present invention employs the detachable type, an adsorption device containing an adsorbent material or an adsorption tube provided with an adsorbent material and disposed inside the adsorption device can be directly removed, so that it is convenient to remove the adsorbent material or replace the adsorbent material therein.
3. When a Cambridge filter is provided in the smoke collecting device of the present invention, since the Cambridge filter is provided between the adsorbent material and the pump, the cigarette smoke first passes through the adsorption material and then through the Cambridge filter, therefore the adsorption material will fully adsorb the volatile organic compounds in the smoke, so that the determination results are more accurate.
4. When the capture chamber of the present invention is a double cone chamber, the two ends of the double cone are open ends, one end is in communication with the adsorbent material and the other end is in communication with the pump. With such a structure, the smoke from the adsorbent material will be buffered in the cone and then pass through the Cambridge filter and be sucked out, and will not directly penetrate the Cambridge filter.

### BRIEF DESCRIPTION OF THE DRAWINGS

Figure 1 illustrates a diagram of a straight-line rotating smoke collecting device not according to the invention with an inner cavity;
Figure 2 illustrates a diagram of an adsorption block;
Figure 3 illustrates a diagram of a rotating smoke collecting device with an adsorption tube.
Figure 4 illustrates a diagram of an adsorption tube;
Figure 5 illustrates suction curve for different volume cavities.

### DETAILED DESCRIPTION OF THE EMBODIMENTS

The technical description of the present invention will be further described in details in combination with specific examples.

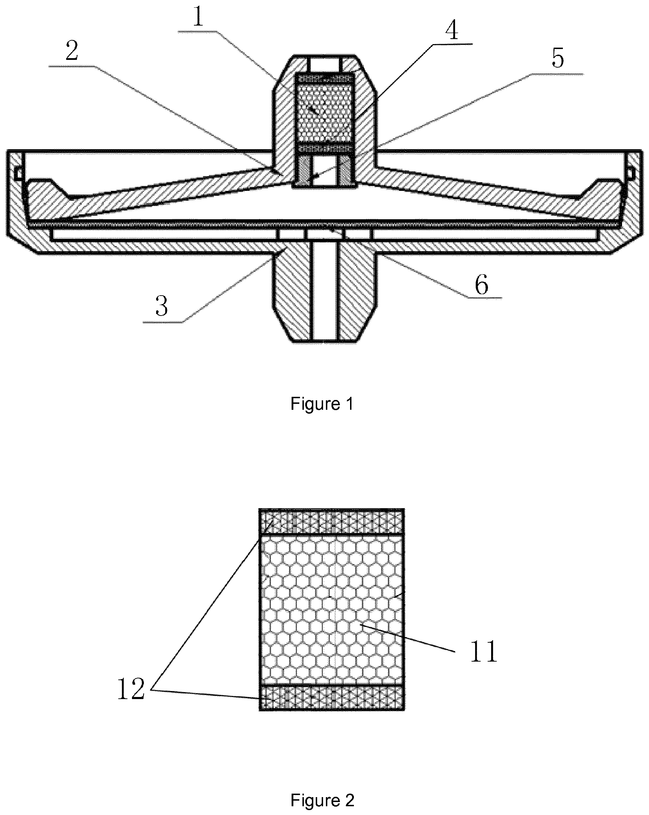

Figure 1 shows A rotating smoke collecting device comprising an adsorption block 1 not according to the invention, an upper collector cover 2, a lower collector cover 3, a hollow upper cover inner cavity 4, a retaining plug 5 and a Cambridge filter 6; it is characterized in that an internal portion of the upper collector cover 2 is provided with the hollow upper cover inner cavity 4; and the adsorption block 1 is located in the hollow upper cover inner cavity 4.

The upper collector cover 2 is connected to the lower collector cover 3 and a hollow cavity is formed therein.

The Cambridge filter 6 is provided at a cross section of the hollow cavity formed by the upper collector cover 2 and the lower collector cover 3.

The upper collector cover is a hollow cavity; the adsorbent block is located in the upper collector cover, retaining plug 5 is disposed at a lower end of the adsorption block 1.

Figure 2 shows the adsorption block 1 comprises a solid adsorbent material 11 and a sieve plate 12, wherein the middle part of the adsorption block 1 is a solid adsorbent material 11 and the sieve plate 12 is provided on upper and lower surfaces of the solid adsorbent material 11.

The adsorbent material 11 in the adsorption block 1 is an activated carbon material a magnetic adsorbent material or a molecular sieve material, a particle size of the adsorbent material is 40-80 µm; the sieve plate 12 on the upper and lower surfaces of the adsorbent material 11 is a sand core sieve plate having an aperture of 40-60 µm.

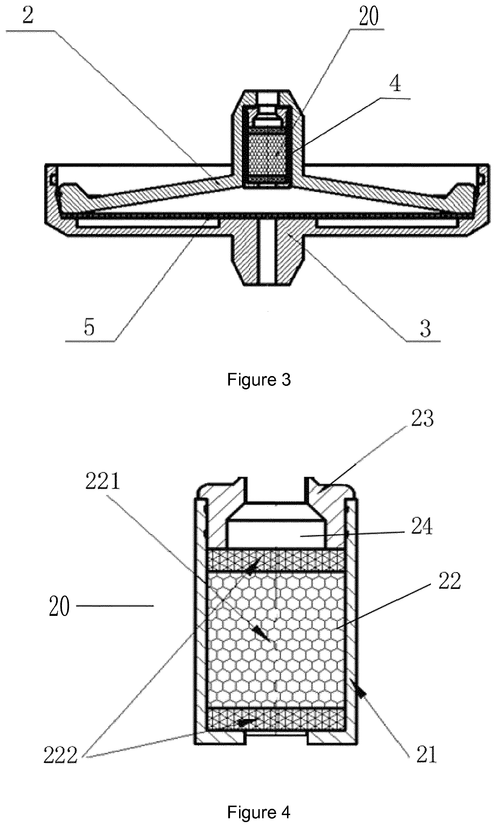

Figure 3 shows the internal portion of the upper collector cover 2 is provided with the hollow upper cover inner cavity 4; and the adsorption tube 20 is located in the hollow upper cover inner cavity 4. the adsorption tube 20 comprises an outer tube 21 a adsorption tubes' adsorption block 22 a tapered interface 23 and a gasket 24 Wherein the outer tube 21 is a hollow cylinder the adsorption tubes' adsorption block 22 is located inside the outer tube 21, the tapered interface 23 is a hollow cylinder the inner cavity is tapered, a wide end of the inner cavity connects with the outer tube 21 side, wherein the gasket 24 is a hollow cylinder which is located inside the tapered interface 23 and abuts against the adsorption tubes' adsorption block 22.

Figure 4 shows in the adsorption tube 20, the middle of the adsorption tubes' adsorption block 22 is a solid adsorbent material 221; the sieve plate 222 is provided on both sides of the solid adsorbent material 221, the adsorbent material 221 is an activated carbon material a magnetic adsorbent material or a molecular sieve material, wherein the adsorbent material has a particle size of from 40 to 80µm, the two side sieve plates 222 of the adsorbent material each is a sand core sieve plate having an aperture of 40-60 µm.

A rotating smoke collecting device and method for analyzing volatile organic compounds in cigarette smoke, wherein the method comprises the following steps:
Step 1, performing sample balance according to GB/T 16447 standard conditions and selecting average mass ± 0.02 g and average suction resistance ± 50 Pa of cigarettes for sample testing;
Step 2, mounting the rotating smoke collecting device on a smoke capturing machine, and sucking one cigarette at a time;
Step 3, removing the rotating smoke collecting device after the capture, and transferring the adsorbent block to a vessel for extraction; and
Step 4, mounting a blank sample in the rotating smoke collecting device, sucking one cigarette at a time and repeating step 3, comparing the results of the blank sample processing with those of the cigarette sample to analyze volatile organic compounds in cigarette smoke.
   a gas chromatography/mass spectrometry (GC/MS) instrument conditions according to the analytical method of the present invention are listed below: Inert Cap AQUATIC-2 column chromatography column (length: 60M, ID: 0.25mm, thickness: 1.4 µm); Programmed temperature procedures: the initial temperature is 40 °c, Keep 6.0min, 20°c/min heating rates rising to 230°c, keep 10min; Carrier gas is helium flow rate is 1.5mL / min; Inlet temperature is 180 °c and 1.0 µl sample volume, split ratio is 10:1; Transmission line temperature 230°c, ion source temperature 230°c, quadrupole temperature 150°c; Mass spectrometry ionization voltage of 70eV; Scanning mode: full scan and selected ion mode simultaneously.

The invention in the smoke analysis of the working process as follows:
When cigarettes in the cigarette holder during the suction process, the cigarette smoke into the collecting cover the inner cavity, Cavity with a diameter of 20 ∼ 60µm installed two upper and lower sieve plate, Between the two sieve plate installed 40 ∼ 80 mesh activated carbon as the adsorption material, smoke through the sieve after the dispersion of multi-stranded small air, and by the active carbon material buffer and then out of the next sieve plate. In this process the relevant components of the cigarette smoke are effectively absorbed. Lower end of Cambridge filtration interception in any other cigarette smoke particulate matter.

**Table 1 Retention times quantification and qualitative ions for each target compound**

| **Compounds** | **Retention time** | **Quantitative ions** | **Qualitative ion** |
|---|---|---|---|
| D6-benzene (internal standard) | 11.55 | 84 | 83 |
| 1,3-butadiene | 4.84 | 54 | 53 |
| Isoprene | 7.12 | 67 | 68 |
| Acrylonitrile | 9.30 | 53 | 53 |
| benzene | 11.60 | 78 | 77 |
| Toluene | 13.38 | 91 | 92 |

### Example 1

Brand **A** cigarettes are selected, performed sample balance in accordance with GB/T 16447 standard conditions, average mass ± 0.02 g and average suction resistance ± 50 Pa for cigarettes are picked up for sample testing. The ready collecting device is installed on the smoke capturing machine, performs suction under ISO standard conditions, and the suction capacity is of 35.0 mL, suction time is 2s, suction frequency is of 60s and one cigarette is sucked at a time. The collecting device is removed after sucking and collecting cigarettes, the adsorbent material and the front and rear sieve plates are transferred to the corresponding containers for extraction.

The same process is applied on blank samples. The results are shown in Table 2.

**Table 2 Determination of volatile organic compounds in cigarettes of brand A - ISO mode**

| **Compounds** | 1,3-butadiene | Isoprene | Acrylonitrile | benzene | Toluene |
|---|---|---|---|---|---|
| **content (µg/cig)** | 37.8 | 312.3 | 7.3 | 40.6 | 78.1 |
| **RSD (%) n=5** | 3.9 | 2.7 | 4.1 | 4.5 | 2.6 |

### Example 2

Brand **B** cigarettes are selected, performed sample balance in accordance with GB/ T 16447 standard conditions, average mass ± 0.02 g and average suction resistance ± 50 Pa for cigarettes are picked up for sample testing. The ready collecting device is installed on the smoke capturing machine, performs suction under Health Canada intense (HCI) standard conditions, suction capacity is of 55.0 mL, suction time is 2s, suction frequency is of 30s and one cigarette is sucked at a time. The collecting device is removed after sucking and collecting cigarettes, the adsorbent material and the front and rear sieve plates are transferred to the corresponding containers for extraction.

The same process is applied on blank samples. The results are shown in Table 3.

**Table 2 Determination of volatile organic compounds in cigarettes of brand B - ISO mode**

| **Compounds** | 1,3-butadiene | Isoprene | Acrylonitrile | benzene | Toluene |
|---|---|---|---|---|---|
| **content (µg/cig)** | 92.6 | 751.8 | 27.1 | 108.8 | 199.5 |
| **RSD (%)** | 3.1 | 2.6 | 3.7 | 2.4 | 1.5 |

### Example 3

Brand **C** cigarettes are selected, performed sample balance in accordance with GB/T 16447 standard conditions, average mass ± 0.02 g and average suction resistance ± 50 Pa for cigarettes are picked up for sample testing. The device according to the invention (a Cambridge filter is set between the adsorbent material and the pump, the device as shown in Figure 1) and a means for providing an adsorbent material between the Cambridge filter and the pump respectively perform suction under ISO standard conditions, suction capacity is of 35.0mL, suction time is 2s, suction frequency is of 60s and one cigarette is sucked at a time. The collecting device is removed after sucking and collecting cigarettes, the adsorbent material and the front and rear sieve plates are transferred to the corresponding containers for extraction.

The same process is applied on blank samples. The technical effects of both devices are compared with each other. The results are shown in Table 4.

**Table 4 Comparison of the effects of two units tested for volatile organic compounds**

| **Compounds** | 1,3-butadiene | Isoprene | Acrylonitrile | benzene | Toluene |
|---|---|---|---|---|---|
| **The device of the present invention (µg/cig)** | 62.0 | 537.6 | 12.4 | 70.7 | 90.3 |
| **The adsorbent material is provided after the filter (µg/cig)** | 58.6 | 533.3 | 11.6 | 69.1 | 88.6 |
| **Deviation (%)** | 2.8 | 0.4 | 3.1 | 1.2 | 1.0 |

The results of the above table show that the present invention provides a relatively good adsorption effect of the Cambridge filter disposed between the adsorbent material and the pump.

### Example 4

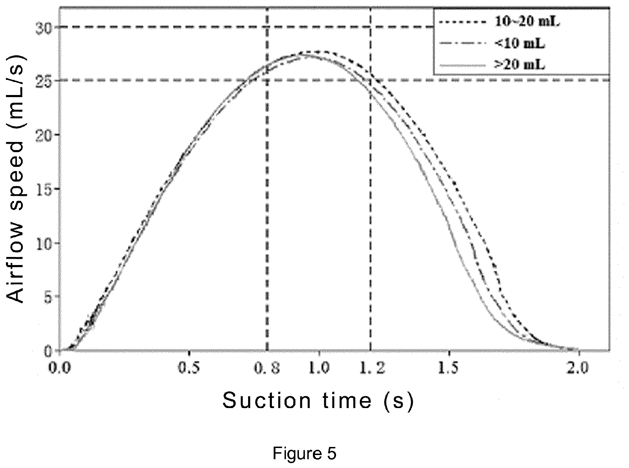

The present embodiment uses the apparatus shown in Fig. 1 in which different collecting cavity sizes are used, for example, 10-20 mL, < 10 mL, >20 mL. The results of effect of collecting cavity sized on testing results are shown in Fig.5. According to Fig. 5, the size of the collecting cavity mainly affects the cigarette suction curve and then impacts the test results. A collecting cavity volume should be minimized under meeting the processing needs, it is recommended to be limited between 10 ∼ 20ml. If the volume is too large or too small, it will have an impact on the suction curve.

Since the present invention adopts a new type of smoke collecting device, as compared with conventional absorption devices, the device according to the present invention is added with an inner cavity containing solid adsorbent material in the front cover of the collector as compared with the conventional capturing device, so that the escape of smoke is relaxed and residence time in the collector is prolonged, and the adsorbent material between the sieve plates has a good adsorption effect on the volatile organic compounds in cigarette smoke, which can make cigarette smoke gas flow to fully contact with adsorbent, to ensure that the relevant components of cigarette smoke is to be effectively absorbed, and meet requirements for the analysis of volatile organic compounds in cigarette smoke. Five types of volatile organic compounds are detected to be limited to 0.03 µg/cig ∼ 0.08 µg/cig and recovery rates are between 97.6%∼107.8%. The device of the invention is simple in operation, and has a good determination of reproducibility, low consumption of organic solvents, there was no significant difference between the test results and the standard method, and can be carried out at room temperature on the evaporation of volatile organic compounds suitable for large quantities of sample analysis.

## Claims

1. A smoke collecting device comprising an adsorption block (1), an upper collector cover (2), a lower collector cover (3), a hollow upper cover inner cavity (4), a retaining plug (5) and a Cambridge filter (6); wherein an internal portion of the upper collector cover (2) is provided with the hollow upper cover inner cavity (4); and the adsorption block (1) is located in the hollow upper cover inner cavity (4),
**characterized in that** the device is a rotating smoke collecting device; and wherein the adsorption block (1) is an adsorption tube (20) comprising an outer tube (21), an adsorption tube adsorption block (22), a tapered interface (23) and a gasket (24), wherein the outer tube (21) is a hollow cylinder and the adsorption tube adsorption block (22) is located inside the outer tube (21), the tapered interface (23) is a hollow cylinder of which the inner cavity is tapered, a wide end of the inner cavity connects with the outer tube (21) side, wherein the gasket (24) is a hollow cylinder, which is located inside the tapered interface (23) and abuts against the adsorption tube adsorption block (22).

2. The device according to claim 1, **characterized in that** the upper collector cover (2) is connected to the lower collector cover (3) and a hollow cavity is formed therein.

3. The device according to claim 2, **characterized in that** the Cambridge filter (6) is provided at a cross section of the hollow cavity formed by the upper collector cover (2) and the lower collector cover (3).

4. The device according to claim 1 or 3, **characterized in that** the retaining plug (5) is disposed at a lower end of the adsorption block (1).

5. The device according to claim 4, **characterized in that** the adsorption block (1) comprises a solid adsorbent material (11) and a sieve plate (12), wherein the middle part of the adsorption block (1) is a solid adsorbent material (11) and the sieve plate (12) is provided on upper and lower surfaces of the solid adsorbent material (11).

6. The device according to claim 5, **characterized in that** the adsorbent material (11) in the adsorption block (1) is an activated carbon material, a magnetic adsorbent material or a molecular sieve material, a particle size of the adsorbent material is 40-80 µm; the sieve plate (12) on the upper and lower surfaces of the adsorbent material (11) is a sand corre sieve plate having an aperture of 40-60 µm.

7. The device according to claim 1, **characterized in that** in the adsorption tube (20), the middle of the adsorption tube adsorption block (22) is a solid adsorbent material (221); a sieve plate (222) is provided on both sides of the solid adsorbent material (221), the adsorbent material (221) is an activated carbon material, a magnetic adsorbent material or a molecular sieve material, wherein the adsorbent material has a particle size of from 40 to 80 µm, the two side sieve plates (222) of the adsorbent material each is a sand core sieve plate having an aperture of 40-60 µm.

8. A method for analyzing volatile organic compounds in cigarette smoke by using the rotating smoke collecting device according to any of claims 1 to 7, wherein the method comprises the following steps:
Step 1, performing sample balance according to GB/T 16447 standard conditions and selecting average mass ± 0.02 g and average suction resistance ± 50 Pa of cigarettes for sample testing;
Step 2, mounting the rotating smoke collecting device on a smoke capturing machine, and sucking one cigarette at a time;
Step 3, removing the rotating smoke collecting device after the capture, and transferring the adsorbent block to a vessel for extraction; and
Step 4, mounting a blank sample in the rotating smoke collecting device, sucking one cigarette at a time and repeating step 3, comparing the results of the blank sample processing with those of the cigarette sample to analyze volatile organic compounds in cigarette smoke.

## Patentansprüche

1. Rauchsammelvorrichtung, aufweisend einen Adsorptionsblock (1), eine obere Kollektorabdeckung (2), eine untere Kollektorabdeckung (3), einen inneren Hohlraum (4) der oberen Abdeckung, einen Haltestecker (5) und einen Cambridge-Filter (6); wobei
ein innerer Teil der oberen Kollektorabdeckung (2) mit dem inneren Hohlraum (4) der oberen Abdeckung versehen ist; und der Adsorptionsblock (1) sich in dem inneren Hohlraum (4) der oberen Abdeckung befindet,
**dadurch gekennzeichnet, dass**
die Vorrichtung eine rotierende Rauchsammelvorrichtung ist; und
wobei der Adsorptionsblock (1) ein Adsorptionsrohr (20) ist, aufweisend ein Außenrohr (21), einen Adsorptionsrohr-Adsorptionsblock (22), eine sich verjüngende Schnittstelle (23) und eine Dichtung (24), wobei das Außenrohr (21) ein Hohlzylinder ist und der Adsorptionsrohr-Adsorptionsblock (22) sich innerhalb des Außenrohres (21) befindet, die sich verjüngende Schnittstelle (23) ein Hohlzylinder ist, dessen innerer Hohlraum sich verjüngt, ein weites Ende des inneren Hohlraums mit der Seite des Außenrohrs (21) verbunden ist, wobei die Dichtung (24) ein Hohlzylinder ist, der sich innerhalb der sich verjüngenden Schnittstelle (23) befindet und an dem Adsorptionsrohr-Adsorptionsblock (22) anliegt.

2. Vorrichtung nach Anspruch 1, **dadurch gekennzeichnet, dass** die obere Kollektorabdeckung (2) mit der unteren Kollektorabdeckung (3) verbunden ist und darin ein Hohlraum gebildet ist.

3. Vorrichtung nach Anspruch 2, **dadurch gekennzeichnet, dass** der Cambridge-Filter (6) an einem Querschnitt des Hohlraums vorgesehen ist, der durch die obere Kollektorabdeckung (2) und die untere Kollektorabdeckung (3) gebildet ist.

4. Vorrichtung nach Anspruch 1 oder 3, **dadurch gekennzeichnet, dass** der Haltestecker (5) am unteren Ende des Adsorptionsblocks (1) angeordnet ist.

5. Vorrichtung nach Anspruch 4, **dadurch gekennzeichnet, dass** der Adsorptionsblock (1) ein festes Adsorbensmaterial (11) und eine Siebplatte (12) umfasst, wobei der mittlere Teil des Adsorptionsblocks (1) ein festes Adsorbensmaterial (11) ist und die Siebplatte (12) auf den oberen und unteren Oberflächen des festen Adsorbensmaterials (11) vorgesehen ist.

6. Vorrichtung nach Anspruch 5, **dadurch gekennzeichnet, dass** das Adsorbensmaterial (11) im Adsorptionsblock (1) ein Aktivkohlematerial, ein magnetisches Adsorbensmaterial oder ein Molekularsieb-Material ist, wobei eine Partikelgröße des Adsorptionsmaterials 40-80 µm beträgt; wobei die Siebplatte (12) auf der oberen und unteren Oberfläche des Adsorbensmaterials (11) eine Sandkernsiebplatte mit einer Öffnung von 40-60 µm ist.

7. Vorrichtung nach Anspruch 1, **dadurch gekennzeichnet, dass** in dem Adsorptionsrohr (20) die Mitte des Adsorptionsrohr-Adsorptionsblocks (22) ein festes Adsorbensmaterial (221) ist; eine Siebplatte (222) auf beiden Seiten des festen Adsorbensmaterials (221) vorgesehen ist, das Adsorbensmaterial (221) ein Aktivkohlematerial, ein magnetisches Adsorbensmaterial oder ein Molekularsieb-Material ist, wobei das Adsorbensmaterial eine Partikelgröße von 40 bis 80 µm aufweist, wobei die zwei Seitensiebplatten (222) des Adsorbensmaterials jeweils eine Sandkernsiebplatte mit einer Öffnung von 40-60 µm sind.

8. Verfahren zum Analysieren flüchtiger organischer Verbindungen im Zigarettenrauch unter Verwendung der rotierenden Rauchsammelvorrichtung nach einem der Ansprüche 1 bis 7, wobei das Verfahren die folgenden Schritte umfasst:
Schritt 1, Durchführen einer Probenbilanz gemäß den Standardbedingungen GB/T 16447 und Auswahl der durchschnittlichen Masse von ± 0,02 g und des durchschnittlichen Saugwiderstands von ± 50 Pa von Zigaretten für Probentests;
Schritt 2, Montieren der rotierenden Rauchsammelvorrichtung an eine Rauchsammelmaschine und Saugen von jeweils einer einzelnen Zigarette;
Schritt 3, Entfernen der rotierenden Rauchsammelvorrichtung nach dem Aufnehmen und Übertragen des Adsorbensblocks in ein Gefäß zur Extraktion; und
Schritt 4, Montieren einer Leerprobe in die rotierende Rauchsammelvorrichtung, Saugen von jeweils einer einzelnen Zigarette und Wiederholen von Schritt 3, Vergleichen der Verarbeitungsergebnisse der Leerprobe mit denen der Zigarettenprobe zur Analyse flüchtiger organischer Verbindungen in Zigarettenrauch.

## Revendications

1. Dispositif collecteur de fumée comprenant un bloc d'adsorption (1), un couvercle de collecteur supérieur (2), un couvercle de collecteur inférieur (3), une cavité intérieure creuse de couvercle supérieur (4), un obturateur de retenue (5) et un filtre Cambridge (6) ; dans lequel
une partie intérieure du couvercle de collecteur supérieur (2) est pourvue de la cavité intérieure creuse (4) de couvercle supérieur ; et le bloc d'adsorption (1) est situé dans la cavité intérieure creuse (4) de couvercle supérieur,
**caractérisé en ce que**
le dispositif est un dispositif collecteur de fumée rotatif ; et
dans lequel le bloc d'adsorption (1) est un tube d'adsorption (20) comprenant un tube extérieur (21), un bloc d'adsorption (22) de tube d'adsorption, une interface conique (23) et un joint (24), dans lequel le tube extérieur (21) est un cylindre creux et le bloc d'adsorption (22) du tube d'adsorption est situé à l'intérieur du tube extérieur (21), l'interface conique (23) est un cylindre creux dont la cavité intérieure est conique, une extrémité large de la cavité intérieure est reliée au côté du tube extérieur (21), dans lequel le joint (24) est un cylindre creux qui est situé à l'intérieur de l'interface conique (23) et prend appui sur le bloc d'adsorption (22) du tube d'absorption.

2. Dispositif selon la revendication 1, **caractérisé en ce que** le couvercle de collecteur supérieur (2) est relié au couvercle de collecteur inférieur (3) et une cavité creuse y est formée.

3. Dispositif selon la revendication 2, **caractérisé en ce que** le filtre Cambridge (6) est prévu à une section transversale de la cavité creuse formée par le couvercle de collecteur supérieur (2) et le couvercle de collecteur inférieur (3).

4. Dispositif selon la revendication 1 ou 3, **caractérisé en ce que** l'obturateur de retenue (5) est disposé à une extrémité inférieure du bloc d'adsorption (1).

5. Dispositif selon la revendication 4, **caractérisé en ce que** le bloc d'adsorption (1) comprend un matériau adsorbant solide (11) et un plateau tamiseur (12), dans lequel la partie centrale du bloc d'adsorption (1) est un matériau adsorbant solide (11) et le plateau tamiseur (12) est prévu sur des surfaces supérieure et inférieure du matériau adsorbant solide (11).

6. Dispositif selon la revendication 5, **caractérisé en ce que** le matériau adsorbant (11) dans le bloc d'adsorption (1) est un matériau de charbon actif, un matériau adsorbant magnétique ou un matériau de tamis moléculaire, une taille de particule du matériau adsorbant vaut de 40 à 80 µm ; le plateau tamiseur (12) sur les surfaces supérieure et inférieure du matériau adsorbant (11) est un plateau tamiseur à noyau en sable ayant une ouverture de 40 à 60 µm.

7. Dispositif selon la revendication 1, **caractérisé en ce que,** dans le tube d'adsorption (20), le milieu du bloc d'adsorption (22) du tube d'adsorption est un matériau adsorbant solide (221) ; un plateau tamiseur (222) est prévu sur les deux côtés du matériau adsorbant solide (221), le matériau adsorbant (221) est un matériau de charbon actif, un matériau adsorbant magnétique ou un matériau de tamis moléculaire, dans lequel le matériau adsorbant a une taille de particule de 40 à 80 µm, les plateaux tamiseurs (222) des deux côtés du matériau adsorbant sont chacun un plateau tamiseur à noyau en sable ayant une ouverture de 40 à 60 µm.

8. Méthode pour analyser des composés organiques volatils dans la fumée de cigarette par utilisation du dispositif collecteur de fumée rotatif selon l'une quelconque des revendications 1 à 7, dans laquelle la méthode comprend les étapes suivantes :
étape 1, effectuer l'équilibrage d'échantillons selon les conditions nominales GB/T 16447 et sélectionner une masse moyenne ± 0,02 g et une résistance moyenne à l'aspiration ± 50 Pa de cigarettes pour tester l'échantillon ;
étape 2, monter le dispositif collecteur de fumée rotatif sur une machine à capter la fumée et aspirer une cigarette à la fois ;
étape 3, retirer le dispositif collecteur de fumée rotatif après la capture et transférer le bloc d'adsorbant dans un récipient pour l'extraction ; et
étape 4, monter un échantillon blanc dans le dispositif collecteur de fumée rotatif, aspirer une cigarette à la fois et répéter l'étape 3, comparer les résultats du traitement de l'échantillon blanc avec ceux de l'échantillon de cigarette pour analyser les composés organiques volatils dans la fumée de cigarette.
